# EUROPEAN PATENT APPLICATION

(11) **EP 3 835 564 A1**
(43) Date of publication of application: **16.06.2021**
(21) Application number: 20213882.2
(22) Date of filing: 14.12.2020
(51) Int. Cl.: F02C 9/18, F02C 9/20

(54) **SYSTEMS AND METHODS FOR OPERATING AN ENGINE HAVING VARIABLE GEOMETRY MECHANISMS**

(30) Priority: 13.12.2019 US 201916713069
(71) Applicant: Pratt & Whitney Canada Corp., Longueuil, Québec J4G 1A1 (CA)
(72) Inventor: ZHU, Ping, Longueuil, Québec J4G 1A1 (CA)
(74) Representative: Dehns

(57) **Abstract**

Methods (300) and systems for operating an engine (10) having at least first and second variable geometry mechanisms (51, 52) are provided. A spool-specific ratio for at least one spool (20, 40) of the engine (10) is determined, wherein the spool-specific ratio relates to an aerodynamic parameter. The spool-specific ratio is compared to a reference to determine a ratio discrepancy for the at least one spool (20, 40). An engine-specific ratio relating to the aerodynamic parameter is determined. At least one of a position of the first variable geometry mechanism (51) and a position of the second variable geometry mechanism (52) is adjusted based on the engine-specific ratio and the ratio discrepancy to reduce the ratio discrepancy.

## Description

### TECHNICAL FIELD

The application relates generally to engines, and more particularly to engines having variable geometry mechanisms.

### BACKGROUND OF THE ART

During certain aircraft operations, it can be desirable to adjust the engine inlet mass flow, which in turn alters the engine output power. For example, attaining certain levels of aircraft engine performance and operability can be predicated on adjustments to the inlet mass flow. One existing technique for adjusting the engine inlet mass flow involves adjusting the geometry of one or more components of the engine, called variable geometry mechanisms.

Existing systems for controlling variable geometry mechanisms may have certain drawbacks. As a result, improvements are needed.

### SUMMARY

In accordance with a first aspect, there is provided a method for operating an engine having at least first and second variable geometry mechanisms. A spool-specific ratio for at least one spool of the engine is determined, wherein the spool-specific ratio relates to an aerodynamic parameter. The spool-specific ratio is compared to a reference to determine a ratio discrepancy for the at least one spool. An engine-specific ratio relating to the aerodynamic parameter is determined. At least one of a position of the first variable geometry mechanism and a position of the second variable geometry mechanism is adjusted based on the engine-specific ratio and the ratio discrepancy to reduce the ratio discrepancy.

In an embodiment according to the previous embodiments, the aerodynamic parameter comprises air pressure or a temperature level.

In at least some embodiments according to any of the previous embodiments, determining the spool-specific ratio comprises determining a first pressure ratio for a first spool of the at least one spool, comprising: measuring a first pressure at an inlet to the first spool; measuring a second pressure at an intermediate point between an outlet to the first spool and an inlet to a second spool of the one or more spools; and determining the first pressure ratio based on the first and second pressures.

In at least some embodiments according to any of the previous embodiments, the spool-specific ratio is a first spool-specific ratio, and the method further comprises determining a second spool-specific ratio, which comprises a second pressure ratio for the second spool, wherein determining the second spool-specific ratio comprises: measuring a third pressure at an outlet to the second spool; and determining the second pressure ratio based on the second and third pressures.

In at least some embodiments according to any of the previous embodiments, determining the engine-specific ratio comprises: measuring a third pressure at an outlet to the second spool; and determining the engine-specific ratio based on the first and third pressures.

In at least some embodiments according to any of the previous embodiments, the second pressure is measured at the outlet to the first spool.

In at least some embodiments according to any of the previous embodiments, the second pressure is measured at the inlet to the second spool.

In at least some embodiments according to any of the previous embodiments, the method further comprises comparing the engine-specific ratio to an engine-specific reference to determine an engine ratio discrepancy for the engine, and wherein the adjusting of the at least one of the position of the first variable geometry mechanism and the position of the second variable geometry mechanism based on the engine-specific ratio and the ratio discrepancy is performed to reduce the engine ratio discrepancy.

In at least some embodiments according to any of the previous embodiments, the method further comprises selecting the reference based on an operating condition of the engine.

In at least some embodiments according to any of the previous embodiments, the operating condition of the engine is one of an output power of the engine and an operating altitude of the engine.

In accordance with a second aspect, there is provided a system for controlling an engine having first and second variable geometry mechanisms. The system comprises a processing unit, and a non-transitory computer-readable medium communicatively coupled to the processing unit. The computer-readable medium comprises computer-readable program instructions executable by the processing unit for: determining a spool-specific ratio for at least one spool of the engine, wherein the spool-specific ratio relates to an aerodynamic parameter; comparing the spool-specific ratio to a reference to determine a ratio discrepancy for the at least one spool; determining an engine-specific ratio relating to the aerodynamic parameter; and adjusting at least one of a position of the first variable geometry mechanism and a position of the second variable geometry mechanism based on the engine-specific ratio and the ratio discrepancy to reduce the ratio discrepancy.

In an embodiment according to the previous embodiment, the aerodynamic parameter comprises air pressure or a temperature level.

In at least some embodiments according to any of the previous embodiments, determining the spool-specific ratio comprises determining a first pressure ratio for a first spool of the at least one spool, comprising: measuring a first pressure at an inlet to the first spool; measuring a second pressure at an intermediate point between an outlet to the first spool and an inlet to a second spool of the one or more spools; and determining the first pressure ratio based on the first and second pressures.

In at least some embodiments according to any of the previous embodiments, the spool-specific ratio is a first spool-specific ratio, and the instructions are further executable for determining a second spool-specific ratio, which comprises a second pressure ratio for the second spool, wherein determining the second spool-specific ratio comprises: measuring a third pressure at an outlet to the second spool; and determining the second pressure ratio based on the second and third pressures.

In at least some embodiments according to any of the previous embodiments, determining the engine-specific ratio comprises: measuring a third pressure at an outlet to the second spool; and determining the engine-specific ratio based on the first and third pressures.

In at least some embodiments according to any of the previous embodiments, the second pressure is measured at the outlet to the first spool.

In at least some embodiments according to any of the previous embodiments, the second pressure is measured at the inlet to the second spool.

In at least some embodiments according to any of the previous embodiments, the instructions are further executable for comparing the engine-specific ratio to an engine-specific reference to determine an engine ratio discrepancy for the engine, and wherein the adjusting of the at least one of the position of the first variable geometry mechanism and the position of the second variable geometry mechanism based on the engine-specific ratio and the ratio discrepancy is performed to reduce the engine ratio discrepancy.

In at least some embodiments according to any of the previous embodiments, the instructions are further executable for selecting the reference based on an operating condition of the engine.

In at least some embodiments according to any of the previous embodiments, the operating condition of the engine is one of an output power of the engine and an operating altitude of the engine.

In accordance with a third aspect, there is provided a method for controlling an engine having first and second variable geometry mechanisms. A first ratio between a first aerodynamic parameter, measured at an inlet of a first spool of the engine, and a second aerodynamic parameter, measured at an intermediate point between the first spool and a second spool of the engine is determined, wherein the first variable geometry mechanism is associated with the first spool, and wherein the second variable geometry mechanism is associated with the second spool. A second ratio between the second aerodynamic parameter and a third aerodynamic parameter, measured at an outlet of the second spool is determined. A third ratio between the first aerodynamic parameter and the third aerodynamic parameter is determined. The first, second, and third ratios are compared to first, second, and third reference ratios, respectively. When the first ratio differs from the first reference ratio beyond a first predetermined range, a first position control signal is generated and output to a controller of the engine to alter a position of the first variable geometry mechanism. When the second ratio differs from the second reference ratio beyond a second predetermined range, a second position control signal is generated and output to the controller of the engine to alter a position of the second variable geometry mechanism. When the third ratio differs from the third reference ratio beyond a third predetermined range, at least one third position control signal is generated and output to the controller of the engine to alter the position of the first variable geometry mechanism and/or the position of the second variable geometry mechanism.

Features of the systems, devices, and methods described herein may be used in various combinations, in accordance with the embodiments described herein.

### DESCRIPTION OF THE DRAWINGS

Reference is now made to the accompanying figures in which:
FIG. 1 is a schematic cross-sectional view of an example gas turbine engine;
FIG. 2 is a block diagram of an example engine system;
FIG. 3 is a flowchart illustrating an example method for operating the engine of FIG. 1; and
FIG. 4 is a block diagram of an example computer system for implementing the method of FIG. 3.

It will be noted that throughout the appended drawings, like features are identified by like reference numerals.

### DETAILED DESCRIPTION

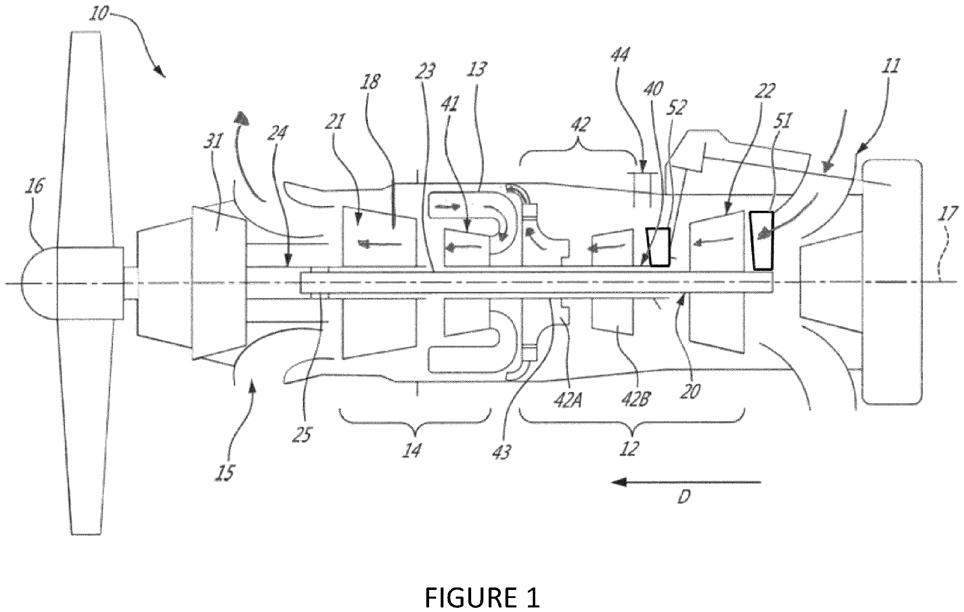

FIG. 1 illustrates an engine 10, for example of a type provided for use in subsonic flight, generally comprising in serial flow communication an air inlet 11, a compressor section 12 for pressurizing the air from the air inlet 11, a combustor 13 in which the compressed air is mixed with fuel and ignited for generating an annular stream of hot combustion gases, a turbine section 14 for extracting energy from the combustion gases, an exhaust outlet 15 through which the combustion gases exit the engine 10. The engine 10 includes a propeller 16 which provides thrust for flight and taxiing. The engine 10 has a longitudinal center axis 17. The engine 10 may be a gas turbine engine, as illustrated in FIG. 1, or any other suitable type of engine.

The engine 10 has a central core 18 defining a gas path through which gases flow as depicted by flow arrows in FIG. 1. The exemplified engine 10 is a "reverse-flow" engine 10 because gases flow through the core 18 from the air inlet 11 at a rear portion thereof, to the exhaust outlet 15 at a front portion thereof. This is in contrast to "through-flow" gas turbine engines in which gases flow through the core of the engine from a front portion to a rear portion. The direction of the flow of gases through the core 18 of the engine 10 disclosed herein can be better appreciated by considering that the gases flow through the core 18 in the same direction D as the one along which the engine 10 travels during flight. Stated differently, gases flow through the engine 10 from a rear end thereof towards the propeller 16.

Although illustrated as a turboprop engine, the engine 10 may alternatively be another type of engine, for example a turbofan engine, also generally comprising in serial flow communication a compressor section, a combustor, and a turbine section, and a fan through which ambient air is propelled. A turboshaft engine may also apply. Similarly, although illustrated as a reverse-flow engine, the techniques described herein can also be applied to through-flow engines. In addition, although the engine 10 is described herein for flight applications, it should be understood that other uses, such as industrial or the like, may apply.

Still referring to FIG. 1, the engine 10 has multiple spools which perform compression to pressurize the air received through the air inlet 11, and which extract energy from the combustion gases before they exit the core 18 via the exhaust outlet 15. According to the illustrated example, the engine 10 is provided in the form of a multi-spool engine having a low pressure (LP) spool 20 and a high pressure (HP) spool 40 independently rotatable about axis 17. However, it is understood that a multi-spool engine could have more than two spools. It should also be noted that the embodiments described herein also consider the use of single-spool engines.

The LP spool 20 includes at least one component to compress the air that is part of the compressor section 12, and at least one component to extract energy from the combustion gases that is part of the turbine section 14. More particularly, the LP spool 20 has a low pressure turbine 21 which extracts energy from the combustion gases, and which is drivingly engaged to an LP compressor 22 for pressurizing the air. The LP turbine 21 (also referred to as the power turbine) drives the LP compressor 22, thereby causing the LP compressor 22 to pressurize the air. Both the LP turbine 21 and the LP compressor 22 are disposed along the axis 17. In the depicted embodiment, both the LP turbine 21 and the LP compressor 22 are axial rotatable components having an axis of rotation that is coaxial with the center axis 17. They can include one or more stages, depending upon the desired engine thermodynamic cycle, for example.

In the depicted embodiment, the LP spool 20 has a power shaft 23 which mechanically couples the LP turbine 21 and the LP compressor 22, and extends axially between them. The shaft 23 is coaxial with the central axis 17 of the engine 10. The shaft 23 allows the LP turbine 21 to drive the LP compressor 22 during operation of the engine 10. The shaft 23 is not limited to the configuration depicted in FIG. 1, and can also mechanically couple the LP turbine 21 and the LP compressor 22 in any other suitable way provided that it transmits a rotational drive from the LP turbine 21 to the LP compressor 22. For example, the shaft 23 can be combined with a geared LP compressor 22 to allow the LP compressor 22 to run at a different rotational speed from the LP turbine 21. This can provide more flexibility in the selection of design points for the LP compressor.

Still referring to FIG. 1, the engine 10 includes an output drive shaft 24. The drive shaft 24 extends forwardly from the LP turbine 21 and is drivingly engaged thereto. In the illustrated example, the drive shaft 24 is distinct from the power shaft 23 and mechanically coupled thereto to be driven by the LP turbine 21. In the depicted embodiment, the drive shaft 24 and the power shaft 23 are coaxial and interconnected. FIG. 1 shows that the power and drive shafts 23, 24 are interconnected with a spline 25. The spline 25, which can include ridges or teeth on the drive shaft 24 that mesh with grooves in the power shaft 23 (or vice versa), allows for the transfer of torque between the drive shaft 24 and the power shaft 23. In the depicted embodiment, the power shaft 23 lies at least partially within the drive shaft 24, such that the spline 25 transfers the rotational drive or torque generated by the LP turbine 21 from the drive shaft 24 to the power shaft 23. The spline 25 can operate so that the power shaft 23 and the drive shaft 24 rotate at the same rotational speed. Other mechanical techniques can also be used to interconnect the power and drive shafts 23, 24. For example, the power and drive shafts 23, 24 can be interconnected by curvic coupling, pins, and interference fits. Other configurations of the drive shaft 24 and the power shaft 23 are also possible. For example, the drive shaft 24 and the power shaft 23 can be a single shaft driven by the LP turbine 21. The drive shaft 24 therefore transfers the rotational output of the LP turbine 21 in a forward direction to drive another component.

A rotatable load, which in the embodiment shown includes the propeller 16, is mountable to the engine 10, and when mounted, is drivingly engaged to the LP turbine 21, and is located forward of the LP turbine 21. In such a configuration, during operation of the engine 10, the LP turbine 21 drives the rotatable load such that a rotational drive produced by the LP turbine 21 is transferred to the rotatable load. The rotatable load can therefore be any suitable component, or any combination of suitable components, that is capable of receiving the rotational drive from the LP turbine 21, as now described.

In the embodiment shown, a reduction gearbox 31 (sometimes referred to herein simply as "RGB 31") is mechanically coupled to a front end of the drive shaft 24, which extends between the RGB 31 and the LP turbine 21. The RGB 31 processes and outputs the rotational drive transferred thereto from the LP turbine 21 via the drive shaft 24 through known gear reduction techniques. The RGB 31 allows for the propeller 16 to be driven at its optimal rotational speed, which is different from the rotational speed of the LP turbine 21.

Still referring to FIG. 1, the HP spool 40 is composed of at least one component to compress the air that is part of the compressor section 12, and at least one component to extract energy from the combustion gases that is part of the turbine section 14. The HP spool 40 is also disposed along the axis 17 and includes an HP turbine 41 drivingly engaged (e.g. directly connected) to a high pressure compressor 42 by an HP shaft 43 rotating independently of the power shaft 23. Similarly to the LP turbine 21 and the LP compressor 22, the HP turbine 41 and the HP compressor 42 can include various stages of axial rotary components. In the depicted embodiment, the HP compressor 42 includes a centrifugal compressor 42A or impeller and an axial compressor 42B, both of which are driven by the HP turbine 41. During operation of the engine 10, the HP turbine 41 drives the HP compressor 42.

It can thus be appreciated that the presence of the above-described LP and HP spools 20, 40 provides the engine 10 with a "split compressor" arrangement. More particularly, some of the work required to compress the incoming air is transferred from the HP compressor 42 to the LP compressor 22. In other words, some of the compression work is transferred from the HP turbine 41 to the more efficient LP turbine 21. This transfer of work may contribute to higher pressure ratios while maintaining a relatively small number of rotors. In a particular embodiment, higher pressure ratios allow for higher power density, better engine specific fuel consumption (SFC), and a lower turbine inlet temperature (sometimes referred to as "T4") for a given power. These factors can contribute to a lower overall weight for the engine 10. The transfer of compression work from the HP compressor 42 to the LP compressor 22 contrasts with some conventional reverse-flow engines, in which the high pressure compressor (and thus the high pressure turbine) perform all of the compression work.

In light of the preceding, it can be appreciated that the LP turbine 21 is the "low-speed" and "low pressure" turbine when compared to the HP turbine 41. The LP turbine 21 is sometimes referred to as a "power turbine". The turbine rotors of the HP turbine 41 spin at a higher rotational speed than the turbine rotors of the LP turbine 21 given the closer proximity of the HP turbine 41 to the outlet of the combustor 13. Consequently, the compressor rotors of the HP compressor 42 may rotate at a higher rotational speed than the compressor rotors of the LP compressor 22. The engine 10 shown in FIG. 1 is thus a "two-spool" engine 10.

The HP turbine 41 and the HP compressor 42 can have any suitable mechanical arrangement to achieve the above-described split compressor functionality. For example, and as shown in FIG. 1, the HP spool 40 includes a high pressure shaft 43 extending between the HP compressor 42 and the HP turbine section 41. The high pressure shaft 43 is coaxial with the power shaft 23 and rotatable relative thereto. The relative rotation between the high pressure shaft 43 and the power shaft 23 allow the shafts 23, 43 to rotate at different rotational speeds, thereby allowing the HP compressor 42 and the LP compressor 22 to rotate at different rotational speeds. The HP shaft 43 can be mechanically supported by the power shaft 23 using bearings and/or the like. In the depicted embodiment, the power shaft 23 is at least partially disposed within the HP shaft 43.

The split compressor arrangement also allows bleed air to be drawn from between the HP compressor 42 and the LP compressor 22. More particularly, in the embodiment of FIG. 1, the engine 10 includes an inter-stage bleed 44 port or valve that is aft of the HP compressor 42 and forward of the LP compressor 22, which may provide for increased flexibility in the available bleed pressures. In a particular embodiment, the bleed pressure design point of the inter-stage bleed 44 is selected based on the pressure ratio of the LP compressor 22, which runs independently from the HP compressor 42. For operability, variable inlet guide vanes (VIGV) 51 and variable guide vanes (VGV) 52 can be used on the LP compressor 22 and at the entry of the HP compressor 42, together with the inter-stage bleed 44.

It should be noted that the engine of FIG. 1 represents only one example engine, and that the embodiments described herein can be applied to any other suitable manner of engine.

In some embodiments, the engine 10 includes one or more variable geometry mechanisms (VGMs) which may assist in achieving optimized engine transient response. In some embodiments, the VGMs consists of one or more VGVs, for instance the VIGV 51 and the VGV 52 (collectively, the "VGMs 51, 52"), which may be one of inlet compressor guide vanes for directing air into the compressor section 12, outlet guide vanes for directing air out of the compressor section 12, variable stator vanes for directing incoming air into rotor blades of the engine 10, and/or one or more variable nozzles, variable bleed-off valves, for instance the inter-stage bleed 44, and the like. It should be understood that one or more of the above-mentioned VGMs may be adjusted for the purpose of decreasing the response time of the engine 10 during rapid engine transitions, e.g. from low to high power levels, or vice-versa. Indeed, adjustment of the position (e.g. the angle) of the VGMs can impact the inlet mass flow to the engine 10, and in turn allow the engine 10 to operate at a required power.

In some embodiments, as illustrated in FIG. 1, the engine 10 has a dual compression system with a low-spool compression system (LPC), including the LP spool 20, and a high-spool compression system (HPC), including the HP spool 40, which are separate from one-another. The VGMs include the VIGV 51 at the air inlet 11 near the LPC and the VGV 52 upstream of the HPC. It should be noted that other VGMs may also be included for both the LPC and the HPC. In other embodiments, the engine 10 includes only one compression system, and includes fewer or more VGMs.

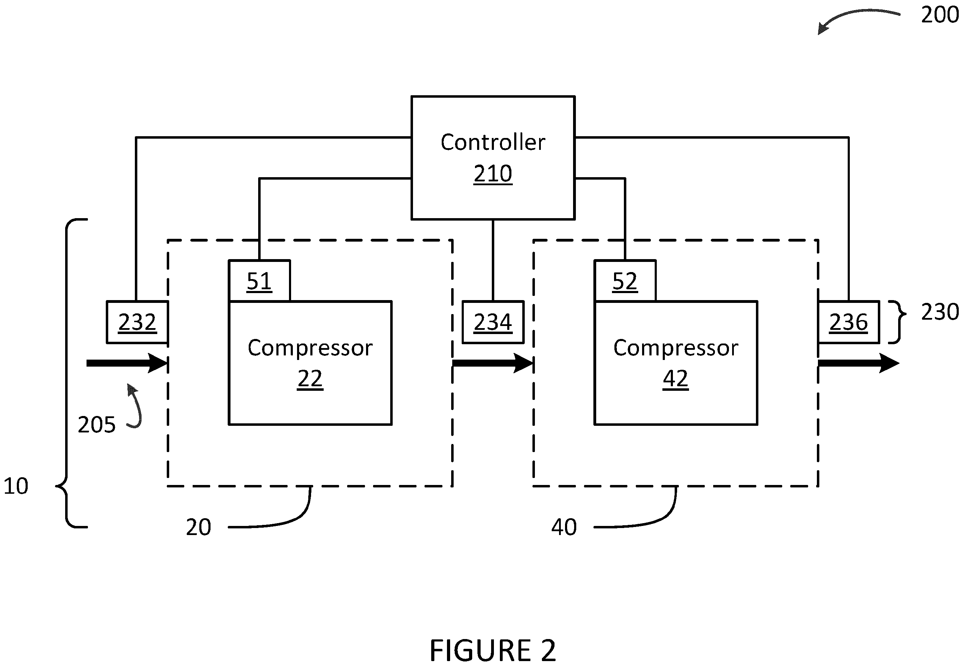

With reference to FIG. 2, there is illustrated an engine system 200, which is composed of the engine 10, a controller 210, and a plurality of sensors, illustrated here as sensors 232, 234, 236 (collectively, "sensors 230"). It should be understood that certain elements of the engine 10, as shown in FIG. 2, are omitted to facilitate understanding. In addition, arrows 205 are provided to show the direction of airflow, namely from the LP spool 20 to the HP spool 40.

As is described in greater detail hereinbelow, the sensors 230 are configured for measuring an aerodynamic parameter for the engine 10 and/or for one of the spools 20, 40. The sensors 230 are shown as forming part of the engine 10, but it should be understood that in some embodiments, the sensors 230 can be external to the engine 10. In addition, in some embodiments, the sensors 230 include more, or fewer, sensors, as appropriate. In the embodiment illustrated in FIG. 2, the sensor 232 is located at an inlet to the LP spool 20, the sensor 234 is located at some intermediate position between an outlet to the LP spool 20 and an inlet to the HP spool 40, and the sensor 236 is located at an outlet to the HP spool 40. It should be noted, however, that other embodiments are also considered. In some cases, the sensor 234 is located at the outlet to the LP spool 20. In some other cases, the sensor 234 is located at the inlet to the HP spool 40. In some further cases, the sensor 234 is located at or proximate some midpoint between the outlet to the LP spool 20 and the inlet to the HP spool 40, or is located at any other suitable position. Other embodiments are also considered. Additionally, although illustrated here as physical sensors located at particular locations, it should be understood that in some cases, one or more of the sensors 230 can be virtual sensors, that is to say, instruments which make use of measurements from other sensors (physical or virtual) to derive a desired parameter.

The controller 210 is provided to control various aspects of the operation of the engine 10. To this end, the controller 210 is communicatively coupled to a variety of instruments associated with the engine 100, including the sensors 230, to acquire information therefrom. The controller 210 can be implemented as part of a full-authority digital engine control (FADEC) or other similar device, including electronic engine control (EEC), engine control unit (EUC), engine electronic control system (EECS), and the like. For example, the controller 210 is configured controlling operation of the VGMs 51, 52 based on, *inter alia,* information acquired from the sensors 230, which can include altering a position and/or an orientation of the VGMs 51, 52.

In some embodiments, the sensors 230 provide the controller 210 with an aerodynamic parameter. Aerodynamic parameters are measures of the aerodynamic work performed by the engine 10. In some instances, the sensors 230 are pressure sensors, and provide the controller 210 with pressure measurements. In some other instances, the sensors 230 are temperature sensors, and provide the controller 210 with temperature measurements. In some still further embodiments, the sensors 230 include combinations of one or more of the above, or use other sensors which provide a reading of an aerodynamic parameter of the engine. The controller 210 can be provided with values for the aerodynamic parameters substantially in real-time, on a punctual basis, in response to requests issued by the sensors, and the like.

In some embodiments, the controller 210 is configured for calculating one or more ratios of the aerodynamic parameters for parts of the engine 10. For example, the controller 210 can calculate one or more spool-specific ratios of the aerodynamic parameters. The spool-specific ratios can include a ratio for the LP spool 20, the HP spool 40, and/or a ratio for any other spool which may form part of the engine 10. For instance, if the sensors 232, 234 provide pressure measurements, the controller 210 can determine a spool-specific pressure ratio for the LP spool 20 by dividing the pressure measurement from sensor 234 by the pressure measurement from sensor 232 (this ratio is sometimes referred to as a "compressor pressure ratio"). Similarly, if the sensors 234, 236 provide pressure measurements, the controller 210 can determine a spool-specific pressure ratio for the HP spool 40. Other ratios can be determined for other measurements, depending on the nature of the sensors 230. The controller 210 can determine any suitable number of spool-specific ratios, as appropriate. The controller 210 can also be configured for calculating one or more ratios of the aerodynamic parameters for the engine 10 as a whole. For example, the controller 210 can calculate a pressure ratio for the engine 10, based on pressure measurements provided by the sensors 232, 236.

In some embodiments, the controller 210 can be configured for controlling the VGMs 51, 52 to achieve or maintain predetermined values for the aerodynamic ratios. The aerodynamic ratios can be associated with particular operating mode or conditions for the engine 10. For instance, operation of the engine 10 can be optimized for certain pressure ratios for the spools 20, 40, and/or for the engine 10 as a whole. In another instance, certain outcomes can be achieved based on maintaining certain aerodynamic ratios, such as better fuel efficiency, lower engine wear, and the like. Other outcomes can also be achieved by maintaining certain aerodynamic ratios. As a result, the controller 210 is configured for adjusting the position and/or orientation of the VGMs 51, 52 to achieve certain aerodynamic ratios.

For example, the controller 210 is configured for determine one or more ratios of aerodynamic parameters, for instance for the spools 20, 40, and for the engine 10. The controller 210 compares the spool-specific ratios to predetermined references for the spool-specific ratios to determine ratio discrepancies for each of the spools 20, 40. The ratio discrepancies are a measure of the difference between the measured spool-specific ratio and the reference, and can be expressed as an absolute number, as a percent variation, or the like. The controller 210 can also compare the engine ratio to a predetermined reference to determine a ratio discrepancy for the engine 10. Similarly to the spool-specific ratio discrepancies, the ratio discrepancy for the engine 10 is also a measure of the difference between the measured engine-specific ratio and the reference for the engine 10.

The references can be stored in a memory or other storage system available to the controller 210. In some embodiments, the controller 210 is provided with multiple sets of references, and selects one or more of the sets of references when performing the comparison. For example, different sets of references are associated with a particular phase or more of operation of the engine 10, or with a particular phase or mode of operation of a larger system of which the engine 10 is a component. For instance, the engine 10 can be operated in the context of an aircraft, and the references can be associated with different phases of a flight mission. Different references can be provided for a ground idle phase, for a takeoff phase, for a cruise phase, for a descent phase, and the like. In another example, different sets of references are associated with an external condition within which the engine 10 is operating, or within which a larger system, of which the engine 10 is a component, is operating. For instance, the references can be associated with an altitude of operation of the engine 10, an ambient temperature of the environment in which the engine 10 is operated, or the like.

Based on the ratio discrepancies and/or the spool-specific and engine ratios, the controller 210 can adjust the position and/or orientation of the VGMs 51, 52 to achieve or maintain certain aerodynamic ratios for the spools 20, 40, and/or for the engine 10. Put differently, the controller 210 adjusts the position and/or orientation of the VGMs 51, 52 to reduce the ratio discrepancies for the spool-specific ratios and/or for the engine-specific ratio. For example, the controller 210 issues commands to actuators associated with the VGMs 51, 52 which effect changes in the position and/or orientation of the VGMs 51, 52. In another example, the controller 210 issues commands to a VGM controller which interfaces with the VGMs 51, 52, or with actuators thereof.

In some embodiments, the controller 210 adjusts the position and/or orientation of the VGMs 51, 52 so that the actual aerodynamic ratios for the spools 20, 40, and/or for the engine 10 are substantially equal to the references, or so that the ratio discrepancies are substantially null. In other embodiments, the controller 210 adjusts the position and/or orientation of the VGMs 51, 52 so that the actual aerodynamic ratios for the spools 20, 40, and/or for the engine 10 are sufficiently similar to the references. For example, a predetermined tolerance around the reference can be considered acceptable (e.g., within 5%, within a predetermined value of kPa or atm, or the like). In some cases, the tolerance can vary with different sets of references. In some other embodiments, the references specify ranges for the aerodynamic ratios, and the controller 210 adjusts the position and/or orientation of the VGMs 51, 52 so that the actual aerodynamic ratios for the spools 20, 40, and/or for the engine 10 are within the specified ranges. Other approaches are also considered.

In this fashion, the VGMs 51, 52 are not scheduled to particular positions based on an internal reading of the output of the engine 10 or of the compressors 22, 42, for example internal temperature, output power, shaft speed, or the like. Instead, the VGMs 51, 52 are scheduled to produce a predetermined aerodynamic result irrespective of the output of the engine 10. The predetermined aerodynamic result can vary based on the phase of operation of the engine 10, in order to ensure flexibility in operation of the VGMs 51, 52. It should be noted that this approach for adjusting the position and/or orientation of the VGMs 51, 52 can be used in cases where the LP spool 20 and the HP spool 40 are decoupled, such that measures of the output of the LP spool 20 do not necessarily correspond to measures of the output of the HP spool 40.

In certain situations, the position of only one of the VGMs 51, 52 is adjusted, based on the ratio discrepancies and/or the spool-specific and engine ratios. For instance, if the engine-specific ratio is sufficiently different from the associated reference value, the spool-specific ratios can then be assessed. If only one of the spool-specific ratios is sufficiently different from its associated reference, then the position of only one of the VGMs 51, 52 is adjusted. In some other situations, the particular coupling between the LP and HP spools 20, 40 may cause a change for one of the spools 20, 40 to affect the other one of the spools 20, 40. For example, if the LP spool 20 feeds substantially directly into the HP spool 40, an adjustment to the VGM 51 associated with the LP spool 20 can change the spool-specific ratio for the HP spool 40, and require a change in the position and/or orientation of the VGM 52. Thus, a ratio discrepancy for one of the spools may require adjustments to the position and/or orientation of both VGMs 51, 52.

It should be noted that the approach outlined herein can also be applied to engines having more than two spools. For example, an engine could have three spools, each with at least one associated VGM. Spool-specific ratios can be determined for each of the spools using relevant aerodynamic parameters, and adjustments to the some or all of the VGMs can be performed to reduce spool-specific discrepancies for all three spools. Adjustments to some of the three spools may affect the spool-specific ratios for the others, which can in turn require additional adjustments. In some embodiments, the controller 210 is configured for concurrently adjusting all VGMs to account for these related effects.

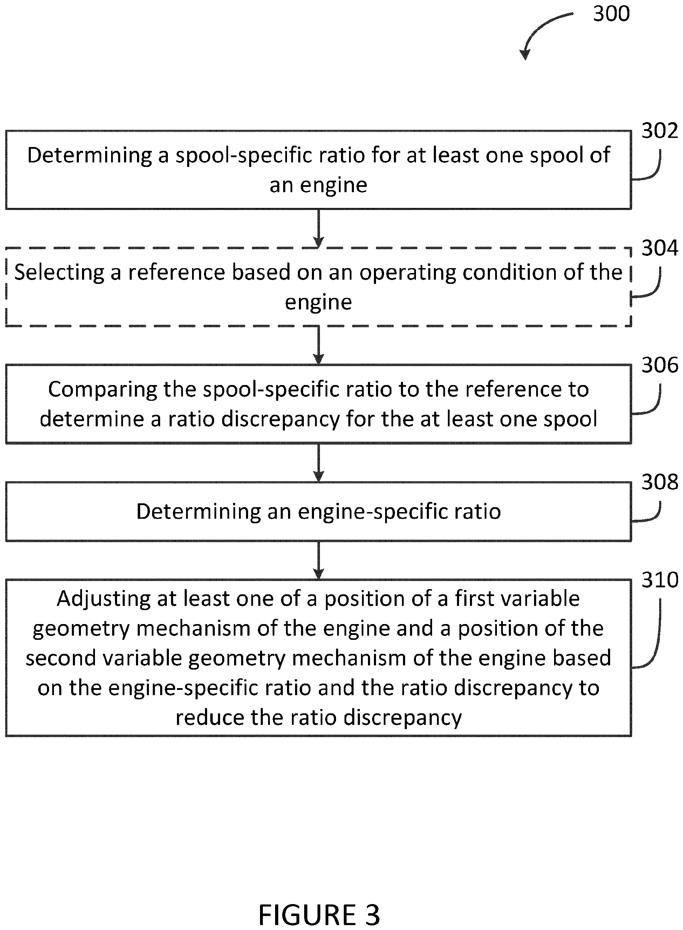

With reference to FIG. 3, there is illustrated a method 300 for operating an engine having at least first and second variable geometry mechanisms, for example the engine 10 with VGMs 51, 52. In some embodiments, the method 300 can be implemented, in whole or in part, by the controller 210. It should be noted other embodiments are also considered, for instance in which the engine 10 has more than two VGMs, more than two spools which can each have one or more associated VGMs, and the like. In some embodiments, the engine 10 is operated as part of an aircraft or other vehicle.

At step 302, a spool-specific ratio, for one or more spools of the engine 10, is determined, for instance for the spools 20, 40. The spool-specific ratio relates to an aerodynamic parameter. The aerodynamic parameter can be pressure, temperature, or the like. For example, a spool-specific pressure ratio is determined for LP spool 20. In another example, spool-specific temperature ratios are determined for spools 20, 40. In some embodiments, the spool-specific ratios can be determined based on measurements of aerodynamic parameters at one or more locations within the engine 10. For example, pressure measurements for the inlet to the LP spool 20 and for an intermediate point between the LP spool 20 and the HP spool 40 can be acquired, and used to determine the spool-specific pressure ratio for the LP spool 20. An additional pressure measurement at the outlet to the HP spool 40 can be acquired and then used, along with the pressure measurement at the intermediate point, to determine the spool-specific pressure ratio for the HP spool 40. For completeness, it is noted that in certain cases, spool-specific ratios are determined for all spools of the engine 10, which can include the spools 20, 40, as well as any other spool of the engine 10.

Optionally, at step 304, a reference is selected, based on the operating conditions of the engine 10. For example, one or more references are selected for each of the spool-specific ratios determined at step 302. Also optionally, a reference can be selected for an engine-specific ratio. The references can be selected based on a phase or mode of operation of the engine 10, based on an external condition within which the engine 10 is operating, or the like.

At step 306, the spool-specific ratio is compared to the reference, in order to determine a ratio discrepancy for the spool(s) 20, 40. In some embodiments, each of the spool-specific ratios is compared to a respective reference. For example, the spool-specific ratio for the LP spool 20 is compared to a first reference, and the spool-specific ratio for the HP spool 40 is compared to a second, different reference. The ratio discrepancies can be expressed as an absolute value, as a relative value, or in any other suitable fashion.

At step 308, an engine-specific ratio, relating to the aerodynamic parameter, is determined. In some embodiments, the engine-specific ratio can relate to the same aerodynamic parameter as did the spool-specific ratios. For instance, the aerodynamic parameter for both the spool-specific ratios and the engine-specific ratio are pressure. In some such cases, the engine-specific ratio can be determined using measurements previously obtained during step 302. In other cases, separate measurements can be performed to determine the engine-specific ratio, for instance from the sensors 230, or using different sensors.

It should be noted that in some cases, steps 302, 304, and 306 can be performed substantially concurrently with step 308. For example, once measurements for determining the spool- and engine-specific ratios are acquired, whether at step 302 or at some other time prior thereto, the spool-specific ratio(s) can be determined substantially at the same time as the engine-specific ratio. Alternatively, in some embodiments, step 308 is performed prior to performing steps 302, 304, and/or 306. For example, the engine-specific ratio is determined at step 308, and if the engine-specific ratio sufficiently corresponds to an associated reference value, then steps 302, 304, and 306 are omitted. In this fashion, the engine-specific ratio determined at step 308 serves as a primary check on the operation of the engine, and subsequent checks are only performed in the event that the engine-specific ratio sufficiently differs from a predetermined reference value.

At step 310, the position and/or orientation of one or more of the VGMs 51, 52 of the engine 10 is adjusted, based on the ratio discrepancy determined at step 306, and based on the engine-specific ratio determined at step 308. In some embodiments, adjusting the position and/or orientation of the VGMs 51, 52 involves outputting a control signal to a VGM controller or to actuators associated with the VGMs 51, 52. For instance, the VGMs 51, 52 can be controlled by a servo-valve or similar actuator, which can be configured for adjusting the position of the VGMs 51, 52 via an analog input from, for example, the controller 210. In other instances, the controller 210 can output a digital signal to the aforementioned VGM controller. The control signal may be transmitted using any suitable communication medium.

In some embodiments, the adjustments to the position and/or orientation of one or more of the VGMs 51, 52 can be performed to minimize or eliminate the ratio discrepancies. In some other embodiments, the adjustments to the position and/or orientation of one or more of the VGMs 51, 52 can be performed to ensure that the spool- and engine-specific ratios are within a range specified by the references. Other embodiments are also considered. It should be noted that in some cases, the method 300 is performed substantially continuously and in real-time to ensure minimization of the ratio discrepancies, or to ensure that the spool- and engine-specific ratios are substantially constantly within the range specified by the references. Other approaches are also considered.

In some embodiments, the engine-specific ratio is compared to an associated reference to determine a ratio discrepancy for the engine 10. The adjustments to the position and/or orientation of one or more of the VGMs 51, 52 can be performed to ensure that one or more, or each, of the spools 20, 40, and that the engine 10, substantially correspond to their associated references. For example, the references can specify a pressure ratio of "2" for the LP spool 20, a pressure ratio of "3" for the HP spool, and a pressure ratio of "6" for the engine 10. The controller 210 can substantially continually adjust the position and/or orientation of the VGMs 51, 52 to ensure that the pressure ratios specified by the references are produced within the spools 20, 40 and the engine 10. It should be noted that the values provided in the above example are provided only for the purpose of illustration.

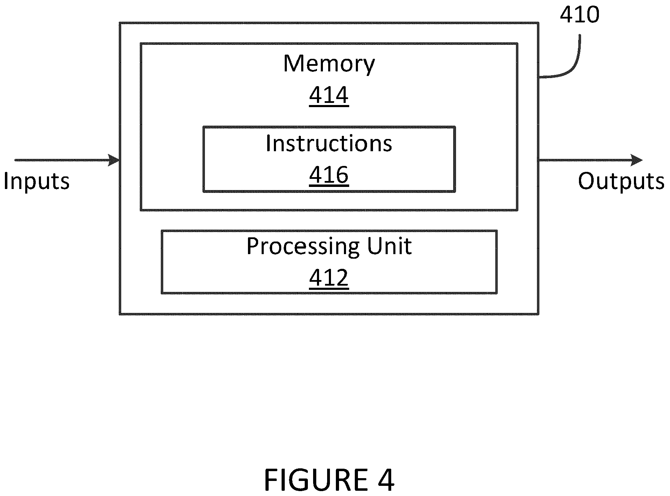

With reference to FIG. 4, the method 300 may be implemented by a computing device 410, which can embody part or all of the controller 210. The computing device 410 comprises a processing unit 412 and a memory 414 which has stored therein computer-executable instructions 416. The processing unit 412 may comprise any suitable devices configured to implement the method 300 such that instructions 416, when executed by the computing device 410 or other programmable apparatus, may cause the functions/acts/steps performed as part of the method 300 as described herein to be executed. The processing unit 412 may comprise, for example, any type of general-purpose microprocessor or microcontroller, a digital signal processing (DSP) processor, a central processing unit (CPU), an integrated circuit, a field programmable gate array (FPGA), a reconfigurable processor, other suitably programmed or programmable logic circuits, or any combination thereof.

The memory 414 may comprise any suitable known or other machine-readable storage medium. The memory 414 may comprise non-transitory computer readable storage medium, for example, but not limited to, an electronic, magnetic, optical, electromagnetic, infrared, or semiconductor system, apparatus, or device, or any suitable combination of the foregoing. The memory 414 may include a suitable combination of any type of computer memory that is located either internally or externally to device, for example random-access memory (RAM), read-only memory (ROM), compact disc read-only memory (CDROM), electro-optical memory, magneto-optical memory, erasable programmable read-only memory (EPROM), and electrically-erasable programmable read-only memory (EEPROM), Ferroelectric RAM (FRAM) or the like. Memory 414 may comprise any storage means (e.g., devices) suitable for retrievably storing machine-readable instructions 416 executable by processing unit 412.

It should be noted that the computing device 410 may be implemented as part of a FADEC or other similar device, including electronic engine control (EEC), engine control unit (EUC), engine electronic control system (EECS), and the like. In addition, it should be noted that the techniques described herein can be performed by a controller of the engine 10 substantially in real-time.

The methods and systems described herein may be implemented in a high level procedural or object oriented programming or scripting language, or a combination thereof, to communicate with or assist in the operation of a computer system, for example the computing device 410. Alternatively, the methods and systems described herein may be implemented in assembly or machine language. The language may be a compiled or interpreted language. Program code for implementing the methods and systems described herein may be stored on a storage media or a device, for example a ROM, a magnetic disk, an optical disc, a flash drive, or any other suitable storage media or device. The program code may be readable by a general or special-purpose programmable computer for configuring and operating the computer when the storage media or device is read by the computer to perform the procedures described herein. Embodiments of the methods and systems described herein may also be considered to be implemented by way of a non-transitory computer-readable storage medium having a computer program stored thereon. The computer program may comprise computer-readable instructions which cause a computer, or more specifically the processing unit 412 of the computing device 410, to operate in a specific and predefined manner to perform the functions described herein, for example those described in the method 300.

Computer-executable instructions may be in many forms, including program modules, executed by one or more computers or other devices. Generally, program modules include routines, programs, objects, components, data structures, etc., that perform particular tasks or implement particular abstract data types. Typically the functionality of the program modules may be combined or distributed as desired in various embodiments.

The above description is meant to be exemplary only, and one skilled in the art will recognize that changes may be made to the embodiments described without departing from the scope of the invention disclosed. Still other modifications which fall within the scope of the present invention will be apparent to those skilled in the art, in light of a review of this disclosure.

The embodiments described in this document provide non-limiting examples of possible implementations of the present technology. Upon review of the present disclosure, a person of ordinary skill in the art will recognize that changes may be made to the embodiments described herein without departing from the scope of the present technology. Yet further modifications could be implemented by a person of ordinary skill in the art in view of the present disclosure, which modifications would be within the scope of the present technology.

## Claims

1. A method (300) for operating an engine (10) having at least first and second variable geometry mechanisms (51, 52), comprising:
determining a spool-specific ratio for at least one spool (20, 40) of the engine (10), wherein the spool-specific ratio relates to an aerodynamic parameter;
comparing the spool-specific ratio to a reference to determine a ratio discrepancy for the at least one spool (20, 40);
determining an engine-specific ratio relating to the aerodynamic parameter; and
adjusting at least one of a position of the first variable geometry mechanism (51) and a position of the second variable geometry mechanism (52) based on the engine-specific ratio and the ratio discrepancy to reduce the ratio discrepancy.

2. The method of claim 1, wherein the aerodynamic parameter comprises air pressure or a temperature level.

3. The method of claim 1 or 2, wherein determining the spool-specific ratio comprises determining a first pressure ratio for a first spool (20) of the at least one spool (20, 40), comprising:
measuring a first pressure at an inlet to the first spool (20);
measuring a second pressure at an intermediate point between an outlet to the first spool (20) and an inlet to a second spool (40) of the one or more spools (20, 40); and
determining the first pressure ratio based on the first and second pressures, optionally wherein the second pressure is measured at the outlet to the first spool (20) or the inlet to the second spool (40).

4. The method of claim 3, wherein the spool-specific ratio is a first spool-specific ratio, and further comprising determining a second spool-specific ratio, which comprises a second pressure ratio for the second spool (40), wherein determining the second spool-specific ratio comprises:
measuring a third pressure at an outlet to the second spool (40); and
determining the second pressure ratio based on the second and third pressures.

5. The method of claim 3 or 4, wherein determining the engine-specific ratio comprises:
measuring a or the third pressure at an or the outlet to the second spool (40); and
determining the engine-specific ratio based on the first and third pressures.

6. The method of any preceding claim, further comprising comparing the engine-specific ratio to an engine-specific reference to determine an engine ratio discrepancy for the engine (10), wherein the adjusting of the at least one of the position of the first variable geometry mechanism (51) and the position of the second variable geometry mechanism (52) based on the engine-specific ratio and the ratio discrepancy is performed to reduce the engine ratio discrepancy.

7. The method of any preceding claim, further comprising selecting the reference based on an operating condition of the engine (10), optionally wherein the operating condition of the engine (10) is one of an output power of the engine (10) and an operating altitude of the engine (10).

8. A system for controlling an engine (10) having first and second variable geometry mechanisms (51, 52), comprising:
a processing unit (412); and
a non-transitory computer-readable medium (414) communicatively coupled to the processing unit (412) and comprising computer-readable program instructions (416) executable by the processing unit (412) for:
determining a spool-specific ratio for at least one spool (20, 40) of the engine (10), wherein the spool-specific ratio relates to an aerodynamic parameter;
comparing the spool-specific ratio to a reference to determine a ratio discrepancy for the at least one spool (20, 40);
determining an engine-specific ratio relating to the aerodynamic parameter; and
adjusting at least one of a position of the first variable geometry mechanism (51) and a position of the second variable geometry mechanism (52) based on the engine-specific ratio and the ratio discrepancy to reduce the ratio discrepancy.

9. The system of claim 8, wherein the aerodynamic parameter comprises air pressure or a temperature level, and/or wherein determining the spool-specific ratio comprises determining a first pressure ratio for a first spool (20) of the at least one spool (20, 40), comprising:
measuring a first pressure at an inlet to the first spool (20);
measuring a second pressure at an intermediate point between an outlet to the first spool (20) and an inlet to a second spool (40) of the one or more spools (20, 40); and
determining the first pressure ratio based on the first and second pressures.

10. The system of claim 9, wherein the spool-specific ratio is a first spool-specific ratio, wherein the instructions are further executable for determining a second spool-specific ratio, which comprises a second pressure ratio for the second spool (40), wherein determining the second spool-specific ratio comprises:
measuring a third pressure at an outlet to the second spool (40); and
determining the second pressure ratio based on the second and third pressures.

11. The system of claim 8 or 9, wherein determining the engine-specific ratio comprises:
measuring a or the third pressure at an or the outlet to the second spool (40); and
determining the engine-specific ratio based on the first and third pressures.

12. The system of any one of claims 9 to 11, wherein the second pressure is measured at the outlet to the first spool (20) or the inlet to the second spool (40).

13. The system of any one of claims 8 to 12, wherein the program instructions (416) are further executable for comparing the engine-specific ratio to an engine-specific reference to determine an engine ratio discrepancy for the engine (10), and wherein the adjusting of the at least one of the position of the first variable geometry mechanism (51) and the position of the second variable geometry mechanism (52) based on the engine-specific ratio and the ratio discrepancy is performed to reduce the engine ratio discrepancy.

14. The system of any one of claims 8 to 13, wherein the program instructions (416) are further executable for selecting the reference based on an operating condition of the engine (10), optionally wherein the operating condition of the engine (10) is one of an output power of the engine (10) and an operating altitude of the engine (10).

15. A method (300) for controlling an engine (10) having first and second variable geometry mechanisms (51, 52), comprising:
determining a first ratio between a first aerodynamic parameter, measured at an inlet of a first spool (20) of the engine (10), and a second aerodynamic parameter, measured at an intermediate point between the first spool (20) and a second spool (40) of the engine (10), wherein the first variable geometry mechanism (51) is associated with the first spool (20), and wherein the second variable geometry mechanism (52) is associated with the second spool (40);
determining a second ratio between the second aerodynamic parameter and a third aerodynamic parameter, measured at an outlet of the second spool (40);
determining a third ratio between the first aerodynamic parameter and the third aerodynamic parameter;
comparing the first, second, and third ratios to first, second, and third reference ratios, respectively;
when the first ratio differs from the first reference ratio beyond a first predetermined range, generating and outputting a first position control signal to a controller (210) of the engine (10) to alter a position of the first variable geometry mechanism (51);
when the second ratio differs from the second reference ratio beyond a second predetermined range, generating and outputting a second position control signal to the controller (210) of the engine (10) to alter a position of the second variable geometry mechanism (52); and
when the third ratio differs from the third reference ratio beyond a third predetermined range, generating and outputting at least one third position control signal to the controller (210) of the engine (10) to alter the position of the first variable geometry mechanism (51) and/or the position of the second variable geometry mechanism (52).
